Europäisches Patentamt

(19) European Patent Office

Office européen des brevets

(11) Numéro de publication : **0 100 387**
**B1**

(12) # FASCICULE DE BREVET EUROPÉEN

(45) Date de publication du fascicule du brevet :
**22.10.86**

(51) Int. Cl.⁴ : **F 42 C 13/02, F 42 C 13/00, G 01 S 17/10**

(21) Numéro de dépôt : **82401466.6**

(22) Date de dépôt : **04.08.82**

(54) Perfectionnements aux dispositifs optiques de détection de proximité.

(43) Date de publication de la demande :
**15.02.84 Bulletin 84/07**

(45) Mention de la délivrance du brevet :
**22.10.86 Bulletin 86/43**

(84) Etats contractants désignés :
**DE GB**

(56) Documents cités :
**FR-A- 2 382 672**
**FR-A- 2 392 398**
**FR-A- 2 500 153**
**FR-A- 2 504 684**
**GB-A- 1 276 081**
**GB-A- 1 511 643**
**US-A- 2 699 543**
**US-A- 3 900 261**

(73) Titulaire : **SEAT BOURGES Société Anonyme**
**1 bis, Boulevard Juranville**
**F-18000 Bourges (FR)**

(72) Inventeur : **Amberny, Philippe**

**F-18390 Sanguy en Septaine (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

La présente invention est relative aux dispositifs optiques destinés à détecter la proximité d'une paroi et activer alors une charge utile, se trouvant initialement en situation passive. Ce dispositif peut notamment, mais non exclusivement, être monté sur un mobile.

Le document FR-A-2 382 672 décrit un dispositif de ce type qui comprend une source de lumière, un photodétecteur placés, l'une pour émettre de la lumière dans un angle solide déterminé, l'autre pour recevoir de la lumière à travers un filtre optique correspondant à la composition spectrale de la source, depuis l'avant, dans ledit angle solide, et une électronique. L'électronique comporte une horloge qui émet périodiquement un signal d'excitation d'un circuit de commande de la source pendant une durée courte par rapport à la période d'horloge et un générateur de fenêtre de télémétrie qui, en réponse à chaque émission de la source, crée un créneau de validation d'une porte d'amenée du signal de sortie du photodétecteur à un circuit de comptage qui, lorsqu'il a reçu une séquence de n impulsions successives ayant un niveau supérieur à un seuil, provenant du photodétecteur, éventuellement sous la réserve de n'avoir pas été remis à zéro par dépassement d'un second seuil par la lumière ambiante, provoque l'activation de la charge utile.

La demande de brevet FR 2 382 672 ainsi que GB-A-1 276 081 décrit, à titre d'exemple de générateur de fenêtre de télémétrie, un circuit électrique à retard qui reçoit le même signal de commande que la source de lumière. Cette solution est de beaucoup préférable à celles, utilisées antérieurement, comportant un circuit de synchronisation à plusieurs sorties (brevet US 3 793 958). En effet, elle assure le synchronisme de façon certaine et elle diminue notablement le risque de déclenchement du retard en l'absence d'envoi de signal lumineux par la source.

La présente invention vise notamment à augmenter encore cette sécurité et/ou à assurer une très grande précision à la fenêtre de télémétrie. Dans ce but, l'invention propose notamment un dispositif du genre ci-dessus défini dans lequel la fenêtre de télémétrie est créée à partir du signal lumineux fourni par la source et utilise le temps mis par la lumière pour parcourir un trajet optique déterminé.

En conséquence, l'invention propose notamment un dispositif optique tel que défini dans la revendication 1. La longueur du guide détermine le décalage entre l'émission du signal lumineux par la source et le créneau de validation. Sa fonction n'est donc pas simplement de transmettre un top de synchronisation (FR-A-2 392 398).

L'invention se prête facilement à la réalisation d'une fenêtre de télémétrie permettant de sélectionner les échos de lumière reçus pendant un intervalle de temps commençant au bout d'un retard $\Delta t_1$ à partir du front avant de l'émission du signal lumineux, le délai $\Delta t_1$ correspondant au temps de parcours du guide d'onde par la lumière. La vitesse de la lumière dans ce guide d'onde étant parfaitement définie, on peut atteindre une très grande précision. La durée de l'intervalle de temps peut être déterminée par une électronique ou correspondre au temps de parcours d'un tronçon supplémentaire du guide.

Il faut au passage remarquer le grand intérêt qui s'attache à l'utilisation d'une fenêtre de télémétrie ne commençant pas immédiatement à l'émission du signal lumineux : une telle fenêtre permet de s'affranchir des phénomènes de réflexion ou diffusion parasite, par exemple sur des précipitations qui peuvent intervenir sur le parcours du mobile. Cet avantage est particulièrement marqué lorsque le mobile est constitué par un projectile, autopropulsé ou non, qui peut se trouver face à des précipitations abondantes et susceptibles de provoquer une activation prématurée, dès la sortie d'un tube de lancement.

La commodité apportée par l'utilisation d'un guide diélectrique d'onde optique permet par ailleurs d'adapter l'invention à tous les types de retard envisageables, et notamment aussi bien aux retards correspondant à de faibles distances projectile-cible, à prévoir pour des projectiles à charge creuse, qu'à ceux pour les distances dépassant la centaine de mètres à prévoir pour des munitions de gros calibre tirées contre des objectifs peu ou non blindés.

L'invention vise également à fournir un dispositif optique, utilisable notamment sur des projectiles destinés à être tirés contre des aéronefs, qui doivent détecter la proximité d'une paroi dans un angle solide très important autour de l'axe du mobile. L'invention propose dans ce but un mode de réalisation particulier utilisant des moyens réflecteurs tournants permettant de balayer l'espace autour de la direction de déplacement du mobile et de recueillir la lumière réfléchie ou diffusée provenant de la même orientation angulaire que l'émission. L'utilisation de moyens réflecteurs tournants plutôt que celle de moyens fixes répartissant l'énergie lumineuse en cône permet de disposer d'un faisceau suffisamment intense pour obtenir des réflexions se différenciant nettement du bruit de fond.

Les moyens réflecteurs tournants peuvent notamment être entraînés par une turbine entraînée par l'air dans lequel se déplace le mobile et empruntant une fraction faible de l'énergie cinétique du mobile. Cet emprunt ne se traduit par aucune modification appréciable de trajectoire du projectile, étant donné qu'il se limitera généralement à quelques joules sur une énergie cinétique qui, au départ, est de plusieurs dizaines de kilojoules. La turbine peut également entraîner un alternateur fournissant l'énergie électrique nécessaire au fonctionnement du dispositif, ce qui permet d'éviter la présence de sources électriques rarement compatibles avec les durées de stockage prévues pour les projectiles.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels :

la figure 1 est un schéma de principe d'un premier mode de réalisation du dispositif ;

les figures 1A et 1B sont des schémas qui montrent des variantes de couplage entre source de lumière et fibre optique ;

la figure 2 est un chronogramme montrant l'allure des signaux qui apparaissent à divers emplacements du schéma de la figure 1 lors du fonctionnement ;

les figures 3 et 3A sont des schémas montrant des dispositions possibles de la source et du photodétecteur dans un projectile, en coupe suivant l'axe de ce dernier ;

la figure 4 similaire à la figure 3, montre une variante de réalisation ;

la figure 5 est un schéma montrant un couplage entre fibre optique et capteur.

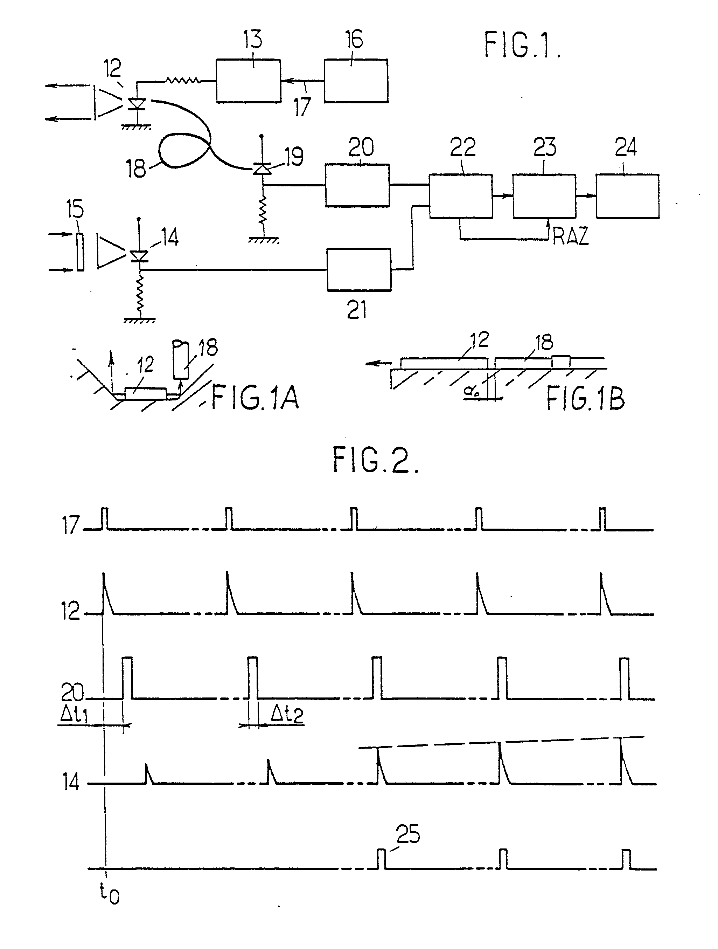

Le dispositif dont le schéma synoptique est montré en figure 1 est destiné à être utilisé sur un mobile constitué par un obus et à provoquer l'allumage d'un artifice pyrotechnique dont est muni l'obus lorsque la distance entre cet obus et une paroi est dans une plage déterminée. Le dispositif comporte une source de lumière dont l'élément essentiel est un composant susceptible d'émettre des impulsions lumineuses de courte durée, à fréquence élevée. Ce composant 12 sera généralement constitué par une diode laser associée à un circuit 13 de commutation rapide.

Le dispositif comporte également un photodétecteur dont l'élément sensible à la lumière est par exemple une photodiode 14 qui ne reçoit la lumière qu'à travers un filtre 15 destiné à arrêter une fraction élevée de la lumière hors du spectre d'émission de la diode laser 12. Si on utilise par exemple une diode laser classique à arséniure de gallium, il suffira d'un filtre de couleur éliminant le visible et l'ultraviolet au-dessous de 850 nm. Si toutefois une grande sélectivité est nécessaire, on peut utiliser un filtre interférentiel qui a l'inconvénient d'être plus coûteux.

La photodiode 14 sera choisie pour présenter un pic de réception adapté à l'émission de la source. Il peut s'agir d'une photodiode ayant un pic de réception vers 900 mm et dont la courbe de réponse s'étend peu au-delà dans l'infrarouge.

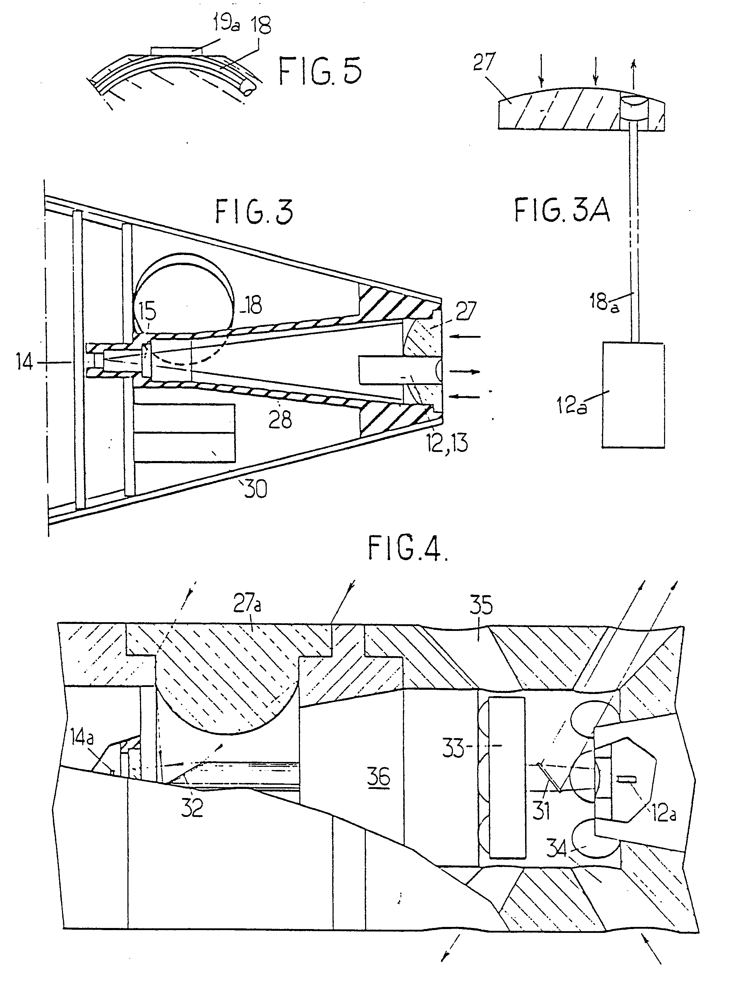

La diode laser 12 et la photodiode 14 pourront avoir une des dispositions décrites dans le document FR-A-2 382 672 ou l'une de celles qui seront décrites plus loin en faisant références aux figures 3 et 4.

Chaque séquence de fonctionnement du dispositif intervient à l'émission d'un signal par une horloge rapide 16 qui émet, sur sa sortie 17, des signaux carrés (ligne 17 de la figure 2). Les signaux d'horloge sont appliqués à l'entrée du circuit de commutation rapide 13 qui, en réponse, applique à la diode laser 12 des impulsions qui provoquent l'émission lumineuse pendant un délai bref, comme indiqué sur la ligne 12 de la figure 2.

Les signaux d'horloge sont émis à une fréquence tenant compte de la distance à laquelle doit être activée la charge et de la vitesse du projectile. Lorsque le déclenchement doit intervenir à une distance inférieure au mètre et que la vitesse est de l'ordre de 1 000 m/s, une période de répétition de l'ordre de 30 µs, avec une durée d'impulsion lumineuse de l'ordre de 2 ns, est généralement satisfaisante. Lorsque des contremesures sont à craindre il est préférable de ne pas stabiliser l'horloge 16, afin d'éviter les brouillages basés sur la répétition à période constante des impulsions lumineuses.

Une fraction de l'émission lumineuse de la diode laser 12 est dirigée vers un guide d'onde optique, qui sera généralement une fibre optique 18, couplé à un second photodétecteur 19. Ce photodétecteur pourra notamment être une photodiode PIN. On voit que la fibre optique constitue une ligne à retard qui fournit une impulsion de même forme que l'émission, à la photodiode PIN 19. Le signal de sortie de la photodiode est appliqué à un amplificateur 20 qui peut, de plus, assurer une mise en forme de l'impulsion. Comme le montre la ligne 20 de la figure 2, les impulsions qui apparaissent à la sortie de l'amplificateur 20 ont alors un front avant présentant un retard $\Delta t_1$ par rapport à l'impulsion lumineuse et au signal d'horloge et une durée $\Delta t_2$.

Le signal de retour capté par la photodiode 14, présentant la forme indiquée sur la ligne 14 de la figure 2, est transmis à un amplificateur 21. Les sorties des amplificateurs 20 et 21 attaquent un circuit de corrélation 22 qui peut être constitué par une simple porte ET. Cette dernière attaque, par l'intermédiaire d'un circuit 23 qui n'autorise l'activation que si le signal de retour dépasse un seuil déterminé en réponse à trois impulsions lumineuses successives (ce nombre n'étant pas limitatif), un circuit pyrotechnique classique de mise à feu 24.

Les circuits 23 et 24 peuvent avoir une constitution similaire à celle décrite dans la demande de brevet FR 2 382 672 déjà mentionnée. Le circuit 23 peut également être constitué par un simple registre à décalage à trois positions avec remise à zéro par le circuit 22 en cas d'absence d'impulsion dépassant le seuil prédéterminé.

Le dispositif de la figure 1 peut être complété par des moyens permettant d'éviter l'activation de la charge sous la seule action d'une lumière ambiante intense sur la photodiode 14 ainsi que des moyens économiseurs d'énergie du genre décrit dans la demande de brevet français déjà mentionnée.

Enfin, le dispositif doit être muni d'un circuit d'alimentation, qui peut être constitué par une source de stockage d'énergie qui est fermée par un interrupteur à commande inertielle sur un convertisseur statique lors du départ du coup. Le convertisseur fournit la tension ou les tensions requises pour le fonctionnement.

Divers montages peuvent être adoptés pour prélever une fraction de l'énergie lumineuse de la diode laser 12. Dans les cas illustrés en figures 1A et 1B, cette fraction est prélevée à l'arrière de la diode. Sur la figure 1A, la diode est montée dans un trièdre réflecteur qui renvoie la lumière à 90°. Dans le cas montré en figure 1B, la fibre optique 18 est portée par le même substrat, en alumine par exemple, que la diode 12 et elle en est séparée par une brèche d'isolement dont la largeur $d_0$ sera en général de 0,1 à 0,2 mm.

On décrira maintenant de façon très brève le fonctionnement du dispositif dans le cas de son application à un projectile dont la vitesse est de l'ordre de 1 000 m/s (soit 1 mm/µs) et qui doit être activé à une distance d'une paroi réfléchissante comprise entre d et d + Δd. En général, d sera de quelques dizaines de cm à quelques mètres (par exemple 45 cm).

A chaque instant $t_0$ marquant le début d'une séquence de fonctionnement, le front montant du signal d'horloge (ligne 17 sur la figure 2) est appliqué au circuit de commutation 13. Celui-ci applique à la diode laser 12 un créneau de tension bref (1 ns par exemple) et la diode 12 fournit un éclat lumineux correspondant. Cet éclat lumineux est émis vers l'extérieur et une fraction est prélevée par la fibre optique 18. Celle-ci doit avoir une longueur choisie en fonction de d. De façon plus précise, la longueur de la fibre optique 18 est choisie pour que le temps de parcours de la lumière dans cette fibre soit égal au temps d'aller et retour de la lumière pour la distance d (3 ns par exemple dans le cas envisagé plus haut). La diode PIN 19 et l'amplificateur de mise en forme 20 fournissent alors un créneau (ligne 20 sur la figure 2) décalé d'une longueur $\Delta t_1$ convenable par rapport à l'éclat lumineux de la diode 12.

La composition des signaux reçus par la porte 22 se traduit par l'absence de signal de sortie aussi longtemps qu'il n'y a pas recouvrement temporel entre les signaux provenant des amplificateurs 20 et 21. Lorsque le recouvrement intervient et qu'en même temps le signal de sortie amplifié provenant de l'amplificateur 21 dépasse un seuil déterminé, une impulsion telle que 25 apparaît à la sortie du circuit 22.

Lorsque trois impulsions apparaissent en réponse à trois coups successifs d'horloge, le registre à décalage 23 se trouve rempli et provoque l'activation du circuit de mise à feu 24.

La fibre optique 18 peut être utilisée non seulement pour marquer le début de la fenêtre de télémétrie, mais aussi pour marquer la fin de la fenêtre, ou de plusieurs fenêtres. On peut ainsi déterminer dans quelle plage de distance se trouve la cible.

Pour cela, il est nécessaire de prévoir, en plus d'un photodétecteur terminal correspondant à la distance la plus longue, un ou plusieurs détecteurs intermédiaires, couplés à la fibre. Dans le cas illustré en figure 5, la fibre 18, constituée par une âme revêtue d'une gaine, est enroulée en hélice sur un mandrin de diamètre tel que la longueur de chaque spire correspond à la largeur de fenêtre cherchée, puis enrobée. Par polissage, on met à nu la fibre le long d'une génératrice. Il suffit alors de placer un photodétecteur supplémentaire 19a sur la fibre à nu.

Cette solution permet d'avoir une fidélité et une précision meilleures qu'une solution électronique. En effet, la vitesse de la lumière ne varie pas dans la gamme de températures de fonctionnement et les caractéristiques de la fibre ne changent pas en cas de stockage de longue durée.

Comme on l'a indiqué plus haut, diverses dispositions géométriques relatives peuvent être adoptées pour la source de lumière 12 et le photodétecteur 14.

Dans la disposition illustrée en figure 3, la source, constituée par une diode laser, est placée dans le nez du projectile et directement plaquée à l'arrière d'un ménisque convergent fournissant un faisceau faiblement divergent, ayant typiquement un angle au sommet de l'ordre de 1,5°. Le photodétecteur est constitué par une photodiode 14 placée derrière le filtre 15 et reçoit la lumière réfléchie par l'intermédiaire d'une lentille annulaire 27. La fibre optique constituant ligne à retard est logée entre un cône 28 portant les composants optiques et la paroi du projectile. Cette fibre 18 peut être bobinée sur elle-même. Etant donné sa courte longueur (inférieure au mètre dans le cas envisagé plus haut), l'atténuation qu'elle fera subir au flux lumineux prélevé restera négligeable. L'alimentation, dont le composant le plus encombrant est constitué par des piles 30, peut être également placée dans le nez du projectile, autour du cône 28. Le circuit de réception-amplification et de traitement et le circuit de mise à feu peuvent être empilés derrière la partie optique.

Dans la disposition illustrée en figure 3A, on retrouve une lentille 27. Mais la source de lumière 12a n'est pas placée dans la lentille, mais à distance. Le faisceau de lumière qu'elle fournit est amené à une lentille d'émission par une fibre optique 18a.

Le mode de réalisation montré en figure 4 est destiné à un projectile qui doit être activé lorsqu'il passe à proximité d'une cible. La partie optique du dispositif est, dans ce but, prévue pour assurer un balayage de l'espace. Elle comporte, en plus d'organes similaires à ceux déjà montrés en figure 3 (et qui portent le même numéro de référence affecté de l'indice a), un équipage rotatif comprenant un miroir d'émission 31, un miroir de réception 32 et une turbine à air 33 d'entraînement. Cette turbine est montée dans des paliers non représentés et elle est placée dans une circulation d'air organisée à l'aide de deux jeux d'évents prévus dans la paroi du projectile. Le mode de réalisation illustré comporte huit events d'entrée 34 qui servent également à la sortie de la lumière fournie par la diode laser 12a et huit évents de sortie 35. La lumière réfléchie ou diffusée par la cible est recueillie par une lentille torique 27a.

De plus, l'équipage mobile du dispositif montré en figure 4 comprend le rotor d'un alternateur 36 qui, par l'intermédiaire de moyens convertisseurs non représentés, fournit l'énergie nécessaire au fonctionnement de l'ensemble.

L'invention ne se limite pas aux modes particuliers de réalisation qui ont été représentés et décrits à titre d'exemples et il doit être entendu que la portée du présent brevet s'étend à toutes variantes restant dans le cadre des équivalences. Par exemple, le dispositif est susceptible d'être monté non plus sur un mobile tel qu'un projectile, mais à poste fixe. Dans ce cas, il pourra être associé à un dispositif de repérage d'orientation, notamment s'il comporte un système de balayage à miroir tournant du genre illustré en figure 4. Dans une telle variante, il sera fréquemment utile d'adopter une fenêtre de télémétrie correspondant à une plage de distance beaucoup plus élevée que si le dispositif est porté par un mobile.

## Revendications

1. Dispositif optique destiné à détecter la proximité d'une paroi et activer alors une charge utile, comprenant une source de lumière (12) et un photodétecteur principal (14) placés, l'une pour émettre de la lumière dans un angle solide déterminé, l'autre pour recevoir de la lumière à travers un filtre optique (15) correspondant à la composition spectrale de la source, et une électronique comportant une horloge (16) qui émet périodiquement un signal d'excitation d'un circuit (13) de commande de la source (12) pendant une durée courte par rapport à la période d'horloge, un générateur de fenêtre de télémétrie (18, 19, 20, 22) qui, en réponse à chaque émission de la source, crée un créneau de validation d'une porte d'amenée (22) du signal de sortie du photodétecteur à un circuit de comptage (23) qui, lorsqu'il a reçu une séquence de n impulsions successives ayant un niveau supérieur à un seuil, provoque ladite activation, caractérisé en ce que le générateur de fenêtre de télémétrie comporte un guide d'onde optique (18) disposé de façon à recevoir une fraction de l'énergie lumineuse émise par la source (12) et à la transmettre avec un retard égal au temps d'aller et retour mis par la lumière émise pour parcourir la distance de proximité à détecter à un second photodétecteur (19) dont le signal de sortie assure la validation de la porte (22) d'amenée du signal de sortie du photodétecteur principal (14) au circuit de comptage (23).

2. Dispositif suivant la revendication 1, caractérisé en ce que le guide d'onde optique (18) est constitué par une fibre optique.

3. Dispositif suivant la revendication 1 ou 2, caractérisé en ce que le second photodétecteur (19) est une photodiode PIN.

4. Dispositif suivant la revendication 1, 2 ou 3, caractérisé en ce que le second photodétecteur (19) est relié à la porte (22) par l'intermédiaire d'un amplificateur de mise en forme (20) fournissant un signal de durée déterminée ($\Delta t_2$) de validation de la porte.

5. Dispositif suivant l'une quelconque des revendications 1 à 3, caractérisé en ce que le générateur de fenêtre de télémétrie comporte au moins un photodétecteur supplémentaire (19a) couplé à une position au-delà du second photodétecteur, au guide d'onde optique (18) destiné à provoquer la fin du créneau de validation.

6. Dispositif suivant l'une quelconque des revendications précédentes, caractérisé en ce que le dispositif comprend un système d'alimentation en énergie électrique entraîné par une turbine empruntant son énergie à un mobile portant le dispositif.

7. Dispositif suivant l'une quelconque des revendications 1 à 5, caractérisé en ce qu'il comprend des moyens réflecteurs (31, 32) entraînés en rotation autour de la direction de déplacement d'un mobile portant le dispositif, provoquant le balayage d'un angle solide de l'espace par l'émission de la source et le recueil de la lumière réfléchie ou diffusée provenant de la même orientation angulaire que l'émission autour de la direction de rotation.

8. Dispositif suivant la revendication 7, caractérisé en ce que les moyens réflecteurs tournants comprennent un miroir d'émission (31) et un miroir de réception (32) appartenant à un équipage rotatif qui comporte une turbine (33) empruntant son énergie au déplacement du mobile, ledit équipage rotatif pouvant comporter de plus le rotor d'un alternateur (36) d'alimentation du dispositif en énergie électrique.

9. Dispositif suivant la revendication 8, caractérisé en ce que la turbine (33) est entraînée par une circulation d'air organisée à travers des évents (34, 35) ménagés dans un boîtier du dispositif, certains desdits évents pouvant servir à la sortie de la lumière provenant de la source hors dudit boîtier.

## Claims

1. Optical device for detecting proximity of a surface and then activating a useful load, comprising a light source for delivering light with a determined solid angle and a main light sensor (14) located for receiving light through an optical filter (15) corresponding to the spectral composition of the source, and electronic means comprising a clock (16) which periodically delivers a signal for energizing a circuit (13) controlling the source (12) for a time duration short as compared with the time period of the clock, a range gate generator (18, 19, 20, 22) which, responsive to each emission by the source, delivers a square signal for enabling a gate (22) which passes the output signal of said light sensor to a counting circuit (23) which, when it has received a sequence of n successive pulses having a level higher than a threshold, causes said activation to occur, characterised in that the range gate generator comprises an optical wave guide (18) located for receiving part of the light energy emitted by the source (12) and passing it with a time delay equal to the back and fro time required by the emitted light for travelling over the proximity distance to be detected to a second light sensor (19) whose output signal enables the gate (22) for passing the output signal of the main light sensor (14) to the counting circuit (23).

2. Device according to claim 1, characterized in that the optical wave guide (18) consists of an optical fiber.

3. Device according to claim 1 or 2, characterized in that the second light sensor (19) is a PIN photodiode.

4. Device according to claim 1, 2 or 3, characterized in that the second light sensor (19) is connected to the gate (22) via a shaping amplifier (20) which delivers a signal having a predetermined duration ($\Delta t_2$) for enabling the gate.

5. Device according to any one of claims 1 to 3, characterized in that the range gate generator comprises at least a supplementary light sensor (19a) coupled to the optical wave guide (18) at a position beyond the second light sensor for causing termination of the enabling square signal.

6. Device according to any one of the preceding claims, characterized in that the device comprises a system for supplying electrical energy, driven by a turbine which takes energy from a missile which carries the device.

7. Device according to any one of claims 1-5, characterized in that it comprises reflecting means (31, 32) driven into rotation about the direction of movement of the missile carrying the device, causing the source emitted light to scan a solid angle through space and causing reception of the reflected or diffused light from the same angular position that the emission around the direction of rotation.

8. Device according to claim 7, characterized in that the rotating reflecting means comprise an emission mirror (31) and a reception mirror (32) belonging to a rotating unit which has a turbine (33) whose energy originates from the movement of the missile, said rotating unit possibly further comprising the rotor of an AC generator (36) for providing electrical energy to the device.

9. Device according to claim 8, characterized in that the turbine (33) is driven by an airflow through air openings (34, 35) formed in a housing of the device, some of said air openings possibly being used for providing an exit path out of the housing for light from the source.

**Patentansprüche**

1. Optische Vorrichtung zur Detektion der Nähe einer Wandung und für die anschließende Aktivierung einer Nutzladung, mit einer Lichtquelle (12), die derart angeordnet ist, daß ihr Licht in einem vorbestimmten festen Winkel emittiert wird, mit einem ersten Photodetektor (14), der derart angeordnet ist, daß er Licht durch ein optisches Filter (15) aufnimmt, das der spektralen Zusammensetzung der Lichtquelle (12) entspricht, mit einer Elektronik, die einen Taktgeber (16) besitzt, der periodisch ein Erregungssignal für einen Schaltkreis (13) zur Steuerung der Lichtquelle (12) abgibt, wobei die Dauer dieses Erregungssignals klein ist im Vergleich zur Periodendauer des Taktgebers, mit einem Entfernungsfenster-Generator (18, 19, 20, 22), der als Reaktion auf jede Lichtemission der Lichtquelle (12) einen Auftastimpuls für eine Torschaltung (22) erzeugt, über die das Ausgangssignal des Photodetektors einer Zählschaltung (23) zuführbar ist, welche die genannte Aktivierung bewirkt, wenn sie eine Folge von n aufeinanderfolgenden Impulsen empfangen hat, deren Pegel über einem Schwellenwert liegt, dadurch gekennzeichnet, daß der Entfernungsfenster-Generator einen optischen Wellenleiter (18) umfaßt, der derart angeordnet ist, daß er einen Teil der von die Lichtquelle (12) emittierten Lichtenergie aufnimmt und diesen mit einer Verzögerung, die gleich der Zeit ist, die das von der Lichtquelle (12) emittierte Licht benötigt, um den Hin- und Rückweg zu der zu detektierenden Annäherungsdistanz zu durchlaufen, zu einem zweiten Photodetektor (19) überträgt, dessen Ausgangssignal das Auftasten der Torschaltung (22) bewirkt, über die das Ausgangssignal des ersten Photodetektors (14) der Zählschaltung (23) zuführbar ist.

2. Vorrichtung nach Anspruch 1, dadurch gekennzeichnet, daß der optische Wellenleiter (18) von einer optischen Faser gebildet ist.

3. Vorrichtung nach Anspruch 1 oder 2, dadurch gekennzeichnet, daß der zweite Photodetektor (19) eine PIN-Photodiode ist.

4. Vorrichtung nach Anspruch 1, 2 oder 3, dadurch gekennzeichnet, daß der zweite Photodetektor (19) mit der Torschaltung (22) über einen Impulsformerverstärker (20) verbunden ist, der ein Auftastsignal vorbestimmter Dauer ($\Delta t_2$) liefert.

5. Vorrichtung nach einen der Ansprüche 1 bis 3, dadurch gekennzeichnet, daß der Entfernungsfenster-Generator wenigstens einen weiteren Photodetektor (19a) umfaßt, der in einer Position hinter dem zweiten Photodetektor mit dem optischen Wellenleiter (18) verbunden ist und der die Beendigung der Auftastung bewirkt.

6. Vorrichtung nach einem der vorhergehenden Ansprüche, dadurch gekennzeichnet, daß ein System für die Speisung mit elektrischer Energie vorgesehen ist, das durch eine Turbine angetrieben ist, die ihre Energie von einem die Vorrichtung tragenden Fahrkörper bezieht.

7. Vorrichtung nach einem der Ansprüche 1 bis 5, dadurch gekennzeichnet, daß Reflektormittel (31, 32) vorgesehen sind, die um die Bewegungsrichtung eines die Vorrichtung tragenden Fahrkörpers rotieren und durch die Emission der Lichtquelle (12) und den Empfang des reflektierten oder gestreuten Lichts aus der der Emission entsprechenden Winkelorientierung das Abtasten eines festen Raumwinkels um die Rotationsrichtung bewirken.

8. Vorrichtung nach Anspruch 7, dadurch gekennzeichnet, daß die rotierenden Reflektormittel einen Emissionsspiegel (31) und einen Empfangsspiegel (32) umfassen, die einer drehbaren Einheit angehören, die eine Turbine (33) beinhaltet, welche ihre Energie aus der Bewegung des Fahrkörpers bezieht, und daß die drehbare Einheit ferner den Rotor eines Wechselstromgenerators (36) für die Speisung der Vorrichtung mit elektrischer Energie umfassen kann.

9. Vorrichtung nach Anspruch 8, dadurch gekennzeichnet, daß die Turbine (33) durch eine Luftzirkulation angetrieben ist, die durch in einem Gehäuse der Vorrichtung angebrachte Öffnungen (34, 35) verläuft, wobei einige dieser Öffnungen zum Austritt des von der Lichtquelle (12) kommenden Lichts aus dem Gehäuse dienen können.

FIG.1.

FIG.1A

FIG.1B

FIG.2.

FIG.5

FIG.3

FIG.3A

FIG.4.